(19) Europäisches Patentamt
European Patent Office
Office européen des brevets

(11) **EP 1 649 449 B1**

# (12) FASCICULE DE BREVET EUROPEEN

(45) Date de publication et mention
de la délivrance du brevet:
**18.12.2019 Bulletin 2019/51**

(21) Numéro de dépôt: **04785998.8**

(22) Date de dépôt: **23.07.2004**

(51) Int Cl.:
**G10K 11/34** *(2006.01)*    **G10K 11/02** *(2006.01)*

(86) Numéro de dépôt international:
**PCT/FR2004/001980**

(87) Numéro de publication internationale:
**WO 2005/015540 (17.02.2005 Gazette 2005/07)**

(54) **PROCÉDÉ ET DISPOSITIF D'IMAGERIE PAR ONDES ACOUSTIQUES**

OBERFLÄCHENWELLEN-ABBILDUNGSVERFAHREN UND EINRICHTUNG

ACOUSTIC WAVE IMAGING METHOD AND DEVICE

(84) Etats contractants désignés:
**AT BE BG CH CY CZ DE DK EE ES FI FR GB GR
HU IE IT LI LU MC NL PL PT RO SE SI SK TR**

(30) Priorité: **25.07.2003 FR 0309140**

(43) Date de publication de la demande:
**26.04.2006 Bulletin 2006/17**

(73) Titulaire: **SuperSonic Imagine
13857 Aix-en-Provence Cedex 3 (FR)**

(72) Inventeurs:
• **FINK, Mathias
92190 Meudon (FR)**
• **MONTALDO, Gabriel
75017 Paris (FR)**
• **TANTER, Mickael
75006 Paris (FR)**

(74) Mandataire: **Plasseraud IP
66, rue de la Chaussée d'Antin
75440 Paris Cedex 09 (FR)**

(56) Documents cités:
**WO-A-97/03438    US-A- 4 875 487**

• **MONTALDO G ET AL: "Generation of very high
pressure pulses with 1-bit time reversal in a solid
waveguide" JOURNAL OF THE ACOUSTICAL
SOCIETY OF AMERICA, DEC. 2001, ACOUST.
SOC. AMERICA THROUGH AIP, USA, vol. 110, no.
6, décembre 2001 (2001-12), pages 2849-2857,
XP012002616 ISSN: 0001-4966**
• **DERODE A ET AL: "Random multiple scattering
of ultrasound. II. Is time reversal a self-averaging
process?" PHYSICAL REVIEW E (STATISTICAL,
NONLINEAR, AND SOFT MATTER PHYSICS),
SEPT. 2001, APS THROUGH AIP, USA, vol. 64, no.
3, 2001, pages 036606/1-13, XP002279676 ISSN:
1063-651X**
• **YON S ET AL: "Sound focusing in rooms: the
time-reversal approach" JOURNAL OF THE
ACOUSTICAL SOCIETY OF AMERICA, MARCH
2003, ACOUST. SOC. AMERICA THROUGH AIP,
USA, vol. 113, no. 3, mars 2003 (2003-03), pages
1533-1543, XP012003364 ISSN: 0001-4966**

EP 1 649 449 B1

**Description**

La présente invention est relative aux procédés et dispositifs d'imagerie par ondes acoustiques.

Plus particulièrement, l'invention concerne un procédé d'imagerie par ondes acoustiques comprenant au moins une étape d'émission au cours de laquelle on fait émettre par un premier réseau de transducteurs (comprenant au moins un transducteur), au moins une onde d'excitation ultrasonore présentant une certaine fréquence centrale d'émission fc et focalisée en au moins un point cible d'un milieu cible, et on fait passer ladite onde d'excitation dans un milieu réverbérant avant d'atteindre le milieu cible, et une étape de réception d'échos émis par le milieu cible en réponse à l'onde d'excitation, en vue d'imager au moins une partie dudit milieu cible.

Le document WO-A-97/03438 décrit un procédé de ce type, qui donne toute satisfaction. US4875487 décrit un procédé d'imagerie par ondes acoustiques.

Le document « Generation of a very high pressure pulses with 1-bit time reversal in a solid waveguide », MONTALDO G. et AI., Journal of the Acoustical Society of America, Dec. 2001, Vol. 110, no. 6, décembre 2001, pages 2849-2857, décrit une méthode pour obtenir avec un nombre faible de transducteurs un impulse acoustique de très grande amplitude en utilisant la dispersion dans un guide d'onde solide et un procédé de retournement temporel.

La présente invention a notamment pour but de perfectionner encore ces procédés connus en vue de les rendre plus facile d'utilisation notamment pour des applications d'imagerie médicales ou industrielles.

A cet effet, selon l'invention, un procédé du genre en question selon la revendication 1 est caractérisé en ce qu'au cours de l'étape d'émission, on utilise comme milieu réverbérant un objet solide réverbérant sur lequel est fixé chaque transducteur du premier réseau, ledit objet solide réverbérant étant adapté pour provoquer des réflexions multiples de l'onde d'excitation qui le traverse et pour qu'une onde impulsionnelle de durée 1/fc entrant dans ledit objet solide entraîne une émission acoustique de durée au moins égale à 10/fc vers le milieu cible.

Grâce à ces dispositions, l'objet solide réverbérant et le premier réseau de transducteurs forment ensemble une sonde monobloc où les transducteurs du premier réseau sont positionnés à l'avance avec précision, ce qui évite ou allège fortement les réglages à chaque utilisation. De plus, lorsque l'objet solide réverbérant est de petite taille et de faible poids, cette sonde est facile à manipuler, sans déréglage du positionnement des transducteurs.

Dans divers modes de réalisation du procédé selon l'invention, on peut éventuellement avoir recours en outre à l'une et/ou à l'autre des dispositions suivantes :

- au cours de l'étape d'émission, on émet l'onde d'excitation s(t) vers un nombre K au moins égal à 1 de points cibles prédéterminés k appartenant au milieu cible, en faisant émettre par chaque transducteur i du premier réseau un signal d'émission :

$$s_i(t) = \sum_{k=1}^{K} e_{ik}(t) \otimes s(t) \text{ ,}$$

où les signaux $e_{ik}(t)$ sont des signaux d'émission élémentaires prédéterminés adaptés pour que, lorsque les transducteurs i émettent des signaux $e_{ik}(t)$, on génère une onde acoustique impulsionnelle au point cible k ;

- les signaux $e_{ik}(t)$ sont codés sur un nombre de bits compris entre 1 et 64 ;
- les signaux $e_{ik}(t)$ sont codés sur 1 bit ;
- les signaux d'émission élémentaires $e_{ik}(t)$ sont déterminés expérimentalement au cours d'une étape d'apprentissage, préalable à ladite étape d'émission ;
- au cours de l'étape d'apprentissage, on fait émettre un signal impulsionnel ultrasonore successivement au niveau de chaque point cible prédéterminé k, on fait capter les signaux $r_{ik}(t)$ reçus par chaque transducteur i du premier réseau à partir de l'émission dudit signal impulsionnel ultrasonore, et on détermine les signaux d'émission élémentaires $e_{ik}(t)$ par retournement temporel des signaux reçus $r_{ik}(t)$ :

$$e_{ik}(t) = r_{ik}(-t) \text{ ;}$$

- au cours de l'étape d'apprentissage, on place un milieu liquide, distinct du milieu cible, au contact de l'objet solide réverbérant, et on fait émettre ledit signal impulsionnel à partir dudit milieu liquide ;
- au cours de l'étape d'apprentissage, point cible prédéterminé k, on fait émettre un signal impulsionnel ultrasonore successivement au niveau de chaque transducteur i du premier réseau, on fait capter les signaux $r_{ik}(t)$ reçus au point cible k à partir de l'émission dudit signal impulsionnel ultrasonore, et on détermine les signaux d'émission élémentaires $e_{ik}(t)$ par retournement temporel des signaux reçus $r_{ik}(t)$ :

$$e_{ik}(t) = r_{ik}(-t) \text{ .}$$

- au cours de l'étape d'apprentissage, on place un milieu liquide, distinct du milieu cible (2), au contact de l'objet solide réverbérant (7), et on capte les signaux $r_{ik}(t)$ dans ledit milieu liquide.
- le milieu liquide, utilisé au cours de l'étape d'apprentissage, comprend essentiellement de l'eau, et au cours de l'étape d'émission, le milieu cible dans lequel on focalise l'onde d'excitation comprend au moins une partie du corps d'un patient ;
- les signaux d'émission élémentaires $e_{ik}(t)$ sont dé-

terminés par le calcul ;

- l'objet solide réverbérant, que l'on fait traverser par l'onde d'excitation au cours de l'étape d'émission, est en contact avec le milieu cible ;
- l'onde d'excitation est émise pendant une durée comprise entre 1/2.fc et 10/fc ;
- au cours de l'étape d'émission, l'onde d'excitation traverse au moins un milieu acoustiquement non linéaire et présente une amplitude suffisante pour que des ondes harmoniques de la fréquence centrale d'émission soient générées dans ledit milieu acoustiquement non linéaire, et au cours de l'étape de réception, on écoute les échos revenant du milieu cible à une fréquence d'écoute qui est un multiple entier de la fréquence centrale d'émission ;
- les ondes harmoniques sont générées dans le milieu cible, qui présente un comportement acoustique non linéaire ;
- au cours de l'étape de réception, on écoute les échos revenant de la zone cible à une fréquence d'écoute égale à deux ou trois fois la fréquence centrale d'émission ;
- au cours de l'étape d'émission, le milieu cible, dans lequel on focalise l'onde d'excitation, comprend au moins une partie du corps d'un patient ;
- au cours de l'étape de réception, on écoute les échos revenant de la zone cible au moyen d'un deuxième réseau de transducteurs solidaire dudit objet solide réverbérant ;
- au cours de l'étape d'émission, on émet une onde d'excitation modulée en amplitude, adaptée pour appliquer sur le milieu cible une pression de radiation qui engendre une onde de cisaillement basse fréquence ;
- au cours de l'étape d'émission, on émet une onde d'excitation adaptée pour chauffer localement le milieu cible.

Par ailleurs, l'invention a également pour objet un dispositif d'imagerie par ondes acoustiques selon la revendication 21 comprenant au moins des moyens d'émission comprenant un premier réseau de transducteurs, ces moyens d'émission étant adaptés pour faire émettre par le premier réseau de transducteurs, au travers d'un milieu réverbérant, au moins une onde d'excitation ultrasonore présentant une certaine fréquence centrale d'émission fc et focalisée en au moins un point cible d'un milieu cible, et des moyens de réception d'échos émis par le milieu cible en réponse à l'onde d'excitation, en vue d'imager au moins une partie dudit milieu cible,
caractérisé en ce que le milieu réverbérant comprend un objet solide réverbérant sur lequel est fixé chaque transducteur du premier réseau, ledit objet solide réverbérant étant adapté pour provoquer des réflexions multiples de l'onde d'excitation qui le traverse et pour qu'une onde impulsionnelle de durée 1/fc entrant dans ledit objet solide entraîne une émission acoustique de durée au moins égale à 10/fc vers le milieu cible.

Dans divers modes de réalisation du dispositif selon l'invention, on peut éventuellement avoir recours en outre à l'une et/ou à l'autre des dispositions suivantes :

- les moyens d'émission sont adaptés pour faire émettre l'onde d'excitation s(t) vers un nombre K au moins égal à 1 de points cibles prédéterminés k appartenant au milieu cible, en faisant émettre par chaque transducteur i du premier réseau un signal d'émission :

$$s_i(t) = \sum_{k=1}^{K} e_{ik}(t) \otimes s(t) \,,$$

  où les signaux $e_{ik}(t)$ sont des signaux d'émission élémentaires prédéterminés adaptés pour que, lorsque les transducteurs i émettent des signaux $e_{ik}(t)$, on génère une onde acoustique impulsionnelle au point cible k ;
- les moyens d'émission sont adaptés pour émettre l'onde d'excitation pendant une durée comprise entre 1/2.fc et 10/fc ;
- les moyens de réception sont adaptés pour écouter les échos revenant du milieu cible à une fréquence d'écoute qui est un multiple entier de la fréquence centrale d'émission ;
- les moyens de réception sont adaptés pour écouter les échos revenant du milieu cible à une fréquence d'écoute égale à deux fois la fréquence centrale d'émission ;
- les moyens de réception comprennent un deuxième réseau de transducteurs solidaire dudit objet solide réverbérant ;
- les moyens d'émission sont adaptés pour émettre une onde d'excitation adaptée pour appliquer une pression de radiation sur le milieu cible ;
- les moyens d'émission sont adaptés pour émettre une onde d'excitation adaptée pour chauffer localement le milieu cible.

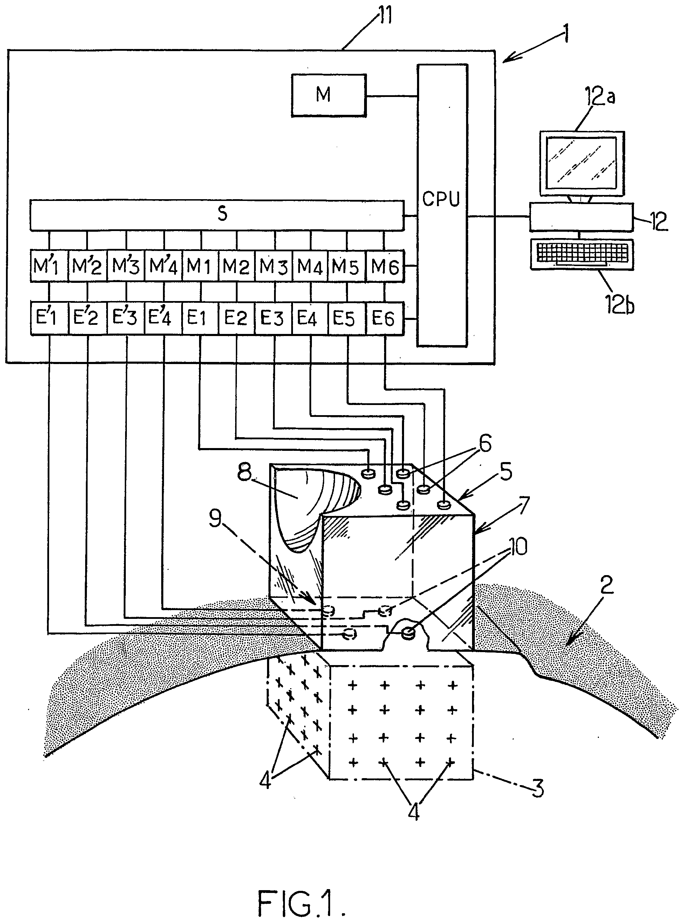

D'autres caractéristiques et avantages de l'invention apparaîtront au cours de la description suivante d'un de ses modes de réalisation, donné à titre d'exemple non limitatif, en regard du dessin joint.
Sur le dessin, la figure 1 est une vue schématique illustrant un dispositif de focalisation d'ondes ultrasonores selon une forme de réalisation de l'invention.
Le dispositif 1 de focalisation d'ondes ultrasonores représenté sur la figure 1 est destiné par exemple à imager un milieu cible 2, par exemple une partie du corps d'un patient dans des applications médicales, ou encore une partie d'un objet industriel dans des applications de contrôles non destructifs, ou autres.
Plus précisément, le dispositif de focalisation d'ondes ultrasonores 1 est destiné à imager une zone à examiner 3 dans le milieu cible 2, cette zone 3 pouvant le cas échéant être à trois dimensions.

A cet effet, le dispositif d'imagerie 1 est adapté pour émettre successivement des ondes d'excitation ultrasonores focalisées sur différents points cibles 4 prédéterminés appartenant à la zone 3. Après émission de chaque onde d'excitation, le dispositif d'imagerie 1 capte les échos émis par la zone cible 3 en réponse à ces ondes d'excitation, de préférence en réalisant également une focalisation en réception sur le point cible 4 sur lequel était focalisée l'onde d'excitation.

Les ondes d'excitation sont émises par un premier réseau 5 de transducteurs d'émission 6, qui sont fixés à un objet solide réverbérant 7 adapté pour que les ondes d'excitation émises par ledit premier réseau 5 de transducteurs subissent des réflexions multiples à l'intérieur dudit objet solide avant de parvenir au milieu cible 2, placé au contact dudit objet solide 7.

Les transducteurs d'émission 6 peuvent être en nombre quelconque, allant de 1 à plusieurs dizaines, par exemple une centaine, en passant par des valeurs intermédiaires telles qu'un nombre compris entre 5 et 10 comme dans l'exemple représenté sur la figure 1.

Dans l'exemple considéré, l'objet 7 peut être constitué par un bloc de métal ou autre matériau rigide, dans lequel les ondes ultrasonores se propagent avec une très faible atténuation et avec des temps de réverbération importants, tels qu'une onde impulsionnelle de durée 1/fc émise par le premier réseau 5 de transducteurs entraîne une émission acoustique de durée au moins égale à 10/fc vers le milieu cible 2.

Dans l'exemple considéré ici, l'objet 7 présente une forme générale de parallélépipède rectangle dans lequel est ménagé un évidement 8 en forme de portion de sphère, les transducteurs 6 du premier réseau étant par exemple collés sur la face de l'objet 7 qui est située à l'opposé de la face de cet objet en contact avec le milieu cible 2.

Bien entendu, d'autres formes générales de l'objet 7 et/ou de l'évidement 8 pourraient être envisagées.

Les échos revenant de la zone cible 3 après émission d'une onde d'excitation focalisée sur l'un des points cibles 4, sont captés par un deuxième réseau 9 de transducteurs de réception 10, lesquels transducteurs de réception peuvent éventuellement être également fixés à l'objet 7 susmentionné, par exemple sur la face de cet objet au contact du milieu cible 2.

Les transducteurs de réception 10 peuvent être en nombre quelconque, allant de 1 à quelques dizaines (ces transducteurs sont au nombre de 4 dans l'exemple particulier représenté sur la figure 1).

Les transducteurs 6, 10 sont commandés indépendamment les uns des autres par un micro-ordinateur 12 (classiquement doté d'interfaces utilisateur tels qu'un écran 12a et un clavier 12b), éventuellement par l'intermédiaire d'une unité centrale CPU qui est contenue par exemple dans une baie électronique 11 reliée par un câble souple aux transducteurs 6, 10.

Cette baie électronique 11 peut comprendre par exemple :

- un circuit échantillonneur E1-E6 ; E'1-E'4 relié à chaque transducteur 6, 10 ;
- une mémoire M1-M6 ; M'1-M'4 reliée à l'échantillonneur de chaque transducteur 6, 10 ;
- un circuit sommateur S relié au mémoire M1-M6 ; M'1-M'4 ;
- et une mémoire générale M reliée à l'unité centrale CPU.

Le dispositif qui vient d'être décrit fonctionne comme suit.

Préalablement à toute opération d'imagerie, on détermine d'abord une matrice de signaux d'émission élémentaire $e_{ik}(t)$ qui sont tels que, pour générer une onde d'excitation s(t) en un point cible k, on fasse émettre par chaque transducteur i du premier réseau 5 un signal d'émission :

$$s_i(t) = e_{ik}(t) \otimes s(t).$$

Ces signaux d'émission élémentaires peuvent éventuellement être déterminés par le calcul (par exemple par une méthode de filtre inverse spatio-temporel), ou ils peuvent être déterminés expérimentalement au cours d'une étape préliminaire d'apprentissage.

Au cours de cette étape d'apprentissage, on peut avantageusement faire émettre un signal impulsionnel ultrasonore par un émetteur tel qu'un hydrophone successivement au niveau de chaque point cible k, et on fait capter les signaux $r_{ik}(t)$ reçus par chaque transducteur i du premier réseau 5 à partir de l'émission dudit signal impulsionnel ultrasonore. Les signaux $r_{ik}(t)$ ainsi captés sont transmis à l'unité centrale CPU, qui calcule alors les signaux d'émission élémentaire $e_{ik}(t)$ par retournement temporel desdits signaux reçus : $e_{ik}(t) = r_{ik}(t)$.

Si le milieu cible 2 est un milieu liquide, il peut éventuellement être possible de procéder à l'étape préliminaire d'apprentissage en positionnant successivement l'émetteur d'onde ultrasonore sur les différents points cibles 4 de la zone à examiner 3. Si le milieu 2 est une partie du corps d'un patient ou un milieu similaire comprenant une grande quantité d'eau, il peut être possible de procéder à la phase d'apprentissage en remplaçant le milieu 2 par un volume de liquide, comprenant de préférence une majorité d'eau, en positionnant successivement l'émetteur d'onde ultrasonore aux emplacements des différents points cibles 4, repérés par rapport à l'objet solide réverbérant 7.

En mettant à profit le principe de réciprocité spatiale, on peut aussi déterminer les signaux $e_{ik}(t)$ en plaçant successivement un ou plusieurs hydrophones aux points cibles k dans le milieu liquide susmentionné. Pour chaque position k de l'hydrophone, on fait émettre successivement une impulsion ultrasonore par chaque transducteur i, et on capte les signaux r$_{ik}$(t) par l'hydrophone. On en déduit ensuite les signaux e$_{ik}$(t) par retournement temporel : e$_{ik}$(t)= r$_{ik}$(-t).

Lorsqu'on veut ensuite imager la zone à examiner 3 du milieu cible 2, on place l'objet solide réverbérant 7 au contact de ce milieu cible, et on fait successivement émettre par les transducteurs 6 du premier réseau, des ondes d'excitation localisées chacune sur l'un des points cibles 4 de la zone à examiner 3.

A cet effet, pour focaliser une onde d'excitation sur un point cible k, on fait émettre par chaque transducteur i du premier réseau 5, un signal d'émission S$_i$(t)=e$_{ik}$(t)⊗s(t).

On répète cette émission d'onde d'excitation pour chaque point cible 4 de la zone à examiner 3.

En variante, il est également possible de générer une onde d'excitation s(t) focalisée en un nombre K supérieur à 1 de points cibles 4 de la zone à examiner 3, en faisant émettre par chaque transducteur i du premier réseau 5 un signal d'émission

$$s_i(t) = \sum_{k=1}^{K} e_{ik}(t) \otimes s(t) \ .$$

Les ondes d'excitation ainsi émises présentent une fréquence centrale qui peut être comprise notamment entre 200kHz et 100 Mhz, par exemple 3 Mhz, et ces ondes d'excitation sont émises par les transducteurs 6 du premier réseau pendant une durée comprise entre 1/2 fc et 10/fc.

Après chaque émission d'onde d'excitation focalisée sur un ou plusieurs des points cibles 4 de la zone à examiner 3, on fait capter les échos émis par le milieu cible 2, au moyen des transducteurs de réception 10 du deuxième réseau 9. Les signaux ainsi captés sont numérisés par les échantillonneurs E'1-E'4 et mémorisés dans les mémoires M'1-M'4, puis traités par une technique classique de formation de voies qui réalise une focalisation en réception sur le ou les points cibles 4 visés lors de l'émission.

Les traitements en question, qui consistent notamment à imposer des retards différents aux signaux captés et à capter ces signaux, peuvent être mis en œuvre par le sommateur S.

Avantageusement, au cours de cette étape de réception d'échos, on peut mettre à profit le comportement acoustique non linéaire de l'un au moins des matériaux traversés par l'onde d'excitation, c'est-à-dire le milieu cible 2 et/ou l'objet solide réverbérant 7 (en pratique, c'est principalement le milieu cible 2 qui présentera un comportement acoustique non linéaire, le matériau de l'objet solide réverbérant présentant de préférence un comportement acoustique linéaire. En effet, on génère l'onde d'excitation avec une amplitude suffisante pour que des ondes harmoniques de la fréquence centrale fc soient générées, avec un niveau suffisant pour pouvoir écouter les échos revenant du milieu cible 2 à une fréquence d'écoute qui est un multiple entier de la fréquence centrale d'émission fc.

Avantageusement, on écoute ainsi les échos revenant du milieu cible 2 à une fréquence double ou triple de la fréquence fc.

Cette écoute sélective en fréquence peut être obtenue soit par la constitution même des transducteurs de réception 10, de façon connue en soi, soit par un filtrage en fréquence des signaux provenant des transducteurs de réception 10.

Grâce à cette écoute à une fréquence différente de la fréquence fc, on s'affranchit de toute perturbation de l'écoute par l'onde d'excitation elle-même, bien que cette onde d'excitation soit particulièrement longue du fait de ses réflexions multiples à l'intérieur de l'objet solide réverbérant 7.

Bien que le dispositif 1 ait été décrit précédemment comme un dispositif d'imagerie ultrasonore, ce dispositif peut le cas échéant être utilisé, en plus de l'imagerie où indépendamment de celle-ci, pour :

- générer une onde de cisaillement dans le milieu cible 2,
- ou chauffer localement ce milieu cible.

Pour générer une onde de cisaillement, par exemple en vue de procéder à une imagerie par suivi de la propagation de l'onde de cisaillement notamment comme décrit dans le document FR-A-2 791 136 ou dans la demande de brevet français n° FR-02 10838, l'onde d'excitation ultrasonore s(t) susmentionnée peut être émise pendant une durée relativement longue, comprise par exemple entre 10/fc et 200000/fc, avec une modulation d'amplitude (continue ou par paliers) permettant d'appliquer une pression de radiation sur le milieu cible 2 pour générer l'onde de cisaillement.

Lorsqu'il s'agit au contraire de chauffer localement le milieu cible 2, l'onde d'excitation ultrasonore susmentionnée s(t) peut être émise (en continu ou non) pendant une durée supérieure à 0,5 s par les transducteurs d'émission 6, de préférence dans une large bande de fréquences. On engendre ainsi une hausse de température dans le milieu 2 pouvant aller de quelques degrés à quelques dizaines de degrés.

On notera que le procédé et le dispositif selon l'invention seraient également utilisables pour des applications de nettoyage de précision par ultrasons ou pour de soudure aux ultrasons.

**Revendications**

1. Procédé d'imagerie par ondes acoustiques comprenant au moins :

   - une étape d'émission au cours de laquelle on fait émettre par un premier réseau (5) de transducteurs, au moins une onde d'excitation ultrasonore présentant une certaine fréquence centrale d'émission fc et focalisée en au moins un point cible (4) d'un milieu cible (2), et on fait passer ladite onde d'excitation dans un milieu réverbérant (7) avant d'atteindre le milieu cible (2), et

- une étape de réception d'échos émis par le milieu cible (2) en réponse à l'onde d'excitation, en vue d'imager au moins une partie (3) dudit milieu cible, **caractérisé en ce qu'**au cours de l'étape d'émission, on utilise comme milieu réverbérant un objet solide réverbérant (7) sur lequel est fixé chaque transducteur (6) du premier réseau (5), ledit objet solide réverbérant (7) étant adapté pour provoquer des réflexions multiples de l'onde d'excitation qui le traverse et pour qu'une onde impulsionnelle de durée 1/fc entrant dans ledit objet solide entraîne une émission acoustique de durée au moins égale à 10/fc vers le milieu cible.

2. Procédé selon la revendication 1, dans lequel, au cours de l'étape d'émission, on émet l'onde d'excitation s(t) vers un nombre K au moins égal à 1 de points cibles (4) prédéterminés k appartenant au milieu cible, en faisant émettre par chaque transducteur i du premier réseau (5) un signal d'émission :

$$s_i(t) = \sum_{k=1}^{K} e_{ik}(t) \otimes s(t) \,,$$

où les signaux $e_{ik}(t)$ sont des signaux d'émission élémentaires prédéterminés adaptés pour que, lorsque les transducteurs i émettent des signaux $e_{ik}(t)$, on génère une onde acoustique impulsionnelle au point cible k.

3. Procédé selon la revendication 2, dans lequel les signaux $e_{ik}(t)$ sont codés sur un nombre de bits compris entre 1 et 64.

4. Procédé selon la revendication 3, dans lequel les signaux $e_{ik}(t)$ sont codés sur 1 bit.

5. Procédé selon l'une quelconque des revendications 2 à 4, dans lequel les signaux d'émission élémentaires $e_{ik}(t)$ sont déterminés expérimentalement au cours d'une étape d'apprentissage, préalable à ladite étape d'émission.

6. Procédé selon la revendication 5, dans lequel, au cours de l'étape d'apprentissage, on fait émettre un signal impulsionnel ultrasonore successivement au niveau de chaque point cible prédéterminé k, on fait capter les signaux $r_{ik}(t)$ reçus par chaque transducteur i du premier réseau (5) à partir de l'émission dudit signal impulsionnel ultrasonore, et on détermine les signaux d'émission élémentaires $e_{ik}(t)$ par retournement temporel des signaux reçus $r_{ik}(t)$ :

$$e_{ik}(t) = r_{ik}(-t).$$

7. Procédé selon la revendication 6, dans lequel, au cours de l'étape d'apprentissage, on place un milieu liquide, distinct du milieu cible (2), au contact de l'objet solide réverbérant (7), et on fait émettre ledit signal impulsionnel à partir dudit milieu liquide.

8. Procédé selon la revendication 5, dans lequel, au cours de l'étape d'apprentissage, pour un point cible prédéterminé k, on fait émettre un signal impulsionnel ultrasonore successivement au niveau de chaque transducteur i du premier réseau, on fait capter les signaux $r_{ik}(t)$ reçus au point cible k à partir de l'émission dudit signal impulsionnel ultrasonore, et on détermine les signaux d'émission élémentaires $e_{ik}(t)$ par retournement temporel des signaux reçus $r_{ik}(t)$ :

$$e_{ik}(t) = r_{ik}(-t).$$

9. Procédé selon la revendication 8, dans lequel, au cours de l'étape d'apprentissage, on place un milieu liquide, distinct du milieu cible (2), au contact de l'objet solide réverbérant (7), et on capte les signaux $r_{ik}(t)$ dans ledit milieu liquide.

10. Procédé selon la revendication 7 ou la revendication 9, dans lequel le milieu liquide, utilisé au cours de l'étape d'apprentissage, comprend essentiellement de l'eau, et au cours de l'étape d'émission, le milieu cible (2) dans lequel on focalise l'onde d'excitation comprend au moins une partie du corps d'un patient.

11. Procédé selon l'une quelconque des revendications 2 à 4, dans lequel les signaux d'émission élémentaires $e_{ik}(t)$ sont déterminés par le calcul.

12. Procédé selon l'une quelconque des revendications précédentes, dans lequel l'objet solide réverbérant (7), que l'on fait traverser par l'onde d'excitation au cours de l'étape d'émission, est en contact avec le milieu cible (2).

13. Procédé selon la revendication 1, dans lequel l'onde d'excitation est émise pendant une durée comprise entre 1/2.fc et 10/fc.

14. Procédé selon la revendication : 1, dans lequel :

- au cours de l'étape d'émission, l'onde d'excitation traverse au moins un milieu acoustiquement non linéaire (2) et présente une amplitude suffisante pour que des ondes harmoniques de la fréquence centrale d'émission soient générées dans ledit milieu acoustiquement non linéaire,
- et au cours de l'étape de réception, on écoute les échos revenant du milieu cible (2) à une fréquence d'écoute qui est un multiple entier de la fréquence centrale d'émission.

**15.** Procédé selon la revendication 14, dans lequel, au cours de l'étape de réception, on écoute les échos revenant de la zone cible (2) à une fréquence d'écoute égale à deux ou trois fois la fréquence centrale d'émission.

**16.** Procédé selon la revendication 1, dans lequel, au cours de l'étape d'émission, le milieu cible (2), dans lequel on focalise l'onde d'excitation, comprend au moins une partie du corps d'un patient.

**17.** Procédé selon la revendication 1, dans lequel, au cours de l'étape de réception, on écoute les échos revenant de la zone cible (2) au moyen d'un deuxième réseau (9) de transducteurs solidaire dudit objet solide réverbérant (7).

**18.** Procédé selon l'une quelconque des revendications 1 à 12, dans lequel, au cours de l'étape d'émission, on émet une onde d'excitation modulée en amplitude, adaptée pour appliquer sur le milieu cible (2) une pression de radiation qui engendre une onde de cisaillement basse fréquence.

**19.** Procédé selon la revendication 18, dans lequel, au cours de l'étape d'émission, le milieu cible (2), dans lequel on focalise l'onde d'excitation, comprend au moins une partie du corps d'un patient.

**20.** Procédé selon l'une quelconque des revendications 1 à 12, dans lequel, au cours de l'étape d'émission, on émet une onde d'excitation adaptée pour chauffer localement le milieu cible (2).

**21.** Dispositif d'imagerie par ondes acoustiques comprenant au moins :

- des moyens d'émission (11, 5) comprenant un premier réseau (5) de transducteurs, ces moyens d'émission étant adaptés pour faire émettre par le premier réseau de transducteurs, au travers d'un milieu réverbérant (7), au moins une onde d'excitation ultrasonore présentant une certaine fréquence centrale d'émission fc et focalisée en au moins un point cible (4) d'un milieu cible (3), et
- des moyens de réception (11, 9) d'échos émis par le milieu cible (2) en réponse à l'onde d'excitation, en vue d'imager au moins une partie (3) dudit milieu cible,

**caractérisé en ce que** le milieu réverbérant comprend un objet solide réverbérant (7) sur lequel est fixé chaque transducteur (6) du premier réseau (5), ledit objet solide réverbérant étant adapté pour provoquer des réflexions multiples de l'onde d'excitation qui le traverse et pour qu'une onde impulsionnelle de durée 1/fc entrant dans ledit objet solide entraîne une émission acoustique de durée au moins égale à 10/fc vers le milieu cible.

**22.** Dispositif selon la revendication 21, dans lequel, les moyens d'émission (11, 5) sont adaptés pour faire émettre l'onde d'excitation s(t) vers un nombre K au moins égal à 1 de points cibles (4) prédéterminés k appartenant au milieu cible (2), en faisant émettre par chaque transducteur i du premier réseau (5) un signal d'émission :

$$s_i(t) = \sum_{k=1}^{K} e_{ik}(t) \otimes s(t) \, ,$$

où les signaux $e_{ik}(t)$ sont des signaux d'émission élémentaires prédéterminés adaptés pour que, lorsque les transducteurs i émettent des signaux $e_{ik}(t)$, on génère une onde acoustique impulsionnelle au point cible k .

**23.** Dispositif selon la revendication 21 dans lequel les moyens d'émission sont adaptés pour émettre l'onde d'excitation pendant une durée comprise entre 1/2.fc et 10/fc.

**24.** Dispositif selon la revendication 21 ou la revendication 23, dans lequel les moyens de réception (11, 9) sont adaptés pour écouter les échos revenant du milieu cible (2) à une fréquence d'écoute qui est un multiple entier de la fréquence centrale d'émission.

**25.** Dispositif selon la revendication 24, dans lequel les moyens de réception (11, 9) sont adaptés pour écouter les échos revenant du milieu cible (2) à une fréquence d'écoute égale à deux fois la fréquence centrale d'émission.

**26.** Dispositif selon l'une quelconque des revendications 23 à 25, dans lequel les moyens de réception (11, 9) comprennent un deuxième réseau (9) de transducteurs solidaire dudit objet solide réverbérant (7).

**27.** Dispositif selon l'une quelconque des revendications 21 à 22, dans lequel les moyens d'émission (11, 5) sont adaptés pour émettre une onde d'excitation adaptée pour appliquer une pression de radiation sur le milieu cible (2).

28. Dispositif selon l'une quelconque des revendications 21 à 22, dans lequel les moyens d'émission (11, 5) sont adaptés pour émettre une onde d'excitation adaptée pour chauffer localement le milieu cible (2).

**Patentansprüche**

1. Verfahren zur Abbildung unter Verwendung von Schallwellen, aufweisend mindestens:

    - einen Emissionsschritt, im Verlaufe dessen man von einem ersten Transducer-Netzwerk (5) mindestens eine Ultraschall-Anregungswelle emittieren lässt, die eine gewisse zentrale Emissionsfrequenz fc aufweist und auf mindestens einen Zielpunkt (4) eines Zielmediums (2) fokussiert ist, und man die Anregungswelle, bevor sie das Zielmedium (2) erreicht, in ein reflektierendes Medium (7) passieren lässt, und
    - einen Empfangsschritt, um Echos, die von dem Zielmedium (2) als Antwort auf die Anregungswelle emittiert werden, zu empfangen, um mindestens einen Teil (3) des Zielmediums abzubilden,

    **dadurch gekennzeichnet, dass** man im Verlaufe des Emissionsschritts als reflektierendes Medium ein reflektierendes Festkörperobjekt (7) verwendet, an dem jeder Transducer (6) des ersten Netzes (5) angebracht ist, wobei das reflektierende Festkörperobjekt (7) eingerichtet ist, um Mehrfachreflexionen der durch das Festkörperobjekt hindurchgehenden Anregungswelle hervorzurufen, und so, dass eine in das Festkörperobjekt eintretende Impulswelle einer Dauer von 1/fc eine Schallemission einer Dauer, die mindestens gleich 10/fc beträgt, hin zu dem Zielmedium zur Folge hat.

2. Verfahren nach Anspruch 1, in welchem man im Verlaufe des Emissionsschritts die Anregungswelle s(t) hin zu einer Anzahl von K, K mindestens gleich 1, vorgegebenen, dem Zielmedium zugehörigen Zielpunkten k (4) emittieren lässt, indem man von jedem Transducer i des ersten Netzes (5) ein Emissionssignal:

$$s_i(t) = \sum_{k=1}^{K} e_{ik}(t) \otimes s(t)$$

emittieren lässt, wobei die Signale $e_{ik}(t)$ vorgegebene elementare Emissionssignale sind, die so konfiguriert sind, dass, wenn die Transducer i Signale $e_{ik}(t)$ emittieren, eine Schallimpulswelle am Zielpunkt k erzeugt wird.

3. Verfahren nach Anspruch 2, in welchem die Signale $ei_k(t)$ an einer Anzahl von Bits zwischen 1 und 64 kodiert sind.

4. Verfahren nach Anspruch 3, in welchem die Signale $e_{ik}(t)$ an 1 Bit kodiert sind.

5. Verfahren nach einem der Ansprüche 2 bis 4, in welchem im Verlaufe eines dem Emissionsschritt vorausgehenden Lernschritts die elementaren Emissionssignale $e_{ik}(t)$ experimentell bestimmt werden.

6. Verfahren nach Anspruch 5, in welchem im Verlaufe des Lernschritts man sukzessiv ein Ultraschallimpulssignal im Bereich jedes vorgegebenen Zielpunkts k emittieren lässt, man ausgehend von der Emission des Ultraschallimpulssignals die von jedem Transducer i des ersten Netzes (5) empfangenen Signale $r_{ik}(t)$ erfassen lässt und man die elementaren Emissionssignale $e_{ik}(t)$ durch Zeitumkehr der empfangenen Signale $r_{ik}(t)$ bestimmt:

$$e_{ik}(t) = r_{ik}(-t).$$

7. Verfahren nach Anspruch 6, in welchem im Verlaufe des Lernschritts man ein flüssiges Medium, das sich von dem Zielmedium (2) unterscheidet, in Kontakt mit dem reflektierenden Festkörperobjekt (7) anordnet und man das Impulssignal emittieren lässt ausgehend von dem flüssigen Medium.

8. Verfahren nach Anspruch 5, in welchem im Verlaufe des Lernschritts für einen vorgegebenen Zielpunkt k man sukzessiv ein Ultraschallimpulssignal im Bereich jedes Transducer i des ersten Netzes (5) emittieren lässt, man ausgehend von der Emission des Ultraschallimpulssignals die an jedem Zielpunkt k empfangenen Signale $r_{ik}(t)$ erfassen lässt und man die elementaren Emissionssignale $ei_k(t)$ durch Zeitumkehr der empfangenen Signale $r_{ik}(t)$ bestimmt:

$$e_{ik}(t) = r_{ik}(-t).$$

9. Verfahren nach Anspruch 8, in welchem im Verlaufe des Lernschritts man ein flüssiges Medium, das sich von dem Zielmedium (2) unterscheidet, in Kontakt mit dem reflektierenden Festkörperobjekt (7) anordnet und man die Signale $r_{ik}(t)$ in dem flüssigen Medium erfasst.

10. Verfahren nach Anspruch 7 oder Anspruch 9, in welchem das im Verlaufe des Lernschritts verwendete flüssige Medium im Wesentlichen Wasser aufweist, und im Verlaufe des Emissionsschritts das Zielmedium (2), in das die Anregungswelle fokussiert wird, mindestens einen Teil des Körpers eines Patienten aufweist.

11. Verfahren nach einem der Ansprüche 2 bis 4, in welchem die elementaren Emissionssignale $e_{ik}(t)$ durch die Berechnung bestimmt werden.

12. Verfahren nach einem der vorstehenden Ansprüche, in welchem das reflektierende Festkörperobjekt (7), das man im Verlaufe des Emissionsschritts von der Anregungswelle durchqueren lässt, in Kontakt mit dem Zielmedium (2) ist.

13. Verfahren nach Anspruch 1, in welchem die Anregungswelle während einer Dauer, die zwischen 1/2fc und 10/fc beträgt, emittiert wird.

14. Verfahren nach Anspruch 1, in welchem:

   - im Verlaufe des Emissionsschritts die Anregungswelle mindestens ein akustisch nichtlineares Medium (2) durchquert und eine Amplitude hat, die derart ausreichend ist, dass die harmonischen Wellen der zentralen Emissionsfrequenz in dem akustisch nichtlinearen Medium erzeugt werden,
   - und im Verlaufe des Empfangsschritts man die von dem Zielmedium (2) zurückkommenden Echos bei einer Abhorchfrequenz abhorcht, die ein ganzzahliges Vielfaches der zentralen Emissionsfrequenz ist.

15. Verfahren nach Anspruch 14, in welchem im Verlaufe des Empfangsschritts man die von dem Zielmedium (2) zurückkommenden Echos bei einer Abhorchfrequenz abhorcht, die gleich zwei oder drei Mal der zentralen Emissionsfrequenz ist.

16. Verfahren nach Anspruch 1, in welchem im Verlaufe des Emissionsschritts das Zielmedium (2), in das man die Anregungswelle fokussiert, mindestens einen Teil des Körpers eines Patienten aufweist.

17. Verfahren nach Anspruch 1, in welchem im Verlauf des Empfangsschritts man die von dem Zielmedium (2) zurückkommenden Echos mit Hilfe eines mit dem reflektierenden Festkörperobjekt (7) verbundenen zweiten Transducer-Netzes (9) abhorcht.

18. Verfahren nach einem der Ansprüche 1 bis 12, in welchem im Verlaufe des Emissionsschritts eine amplitudenmodulierte Anregungswelle emittiert wird, die eingerichtet ist, um auf das Zielmedium (2) einen Strahlungsdruck auszuüben, der eine niederfrequente Scherwelle erzeugt.

19. Verfahren nach Anspruch 18, in welchem im Verlaufe des Emissionsschritts das Zielmedium (2), in das man die Anregungswelle fokussiert, mindestens einen Teil des Körpers eines Patienten aufweist.

20. Verfahren nach einem der Ansprüche 1 bis 12, in welchem im Verlaufe des Emissionsschritts eine Anregungswelle emittiert wird, die eingerichtet ist, das Zielmedium (2) lokal zu erwärmen.

21. Einrichtung zur Abbildung unter Verwendung von Schallwellen, aufweisend mindestens:

   - Emissionseinrichtungen (11,5) aufweisend ein erstes Transducer-Netzwerk (5), wobei die Emissionseinrichtungen eingerichtet sind, um von dem Transducer-Netzwerk durch ein reflektierendes Medium (7) hindurch mindestens eine Ultraschall-Anregungswelle emittieren zu lassen, die eine gewisse zentrale Emissionsfrequenz fc aufweist und auf mindestens einen Zielpunkt (4) eines Zielmediums (3) fokussiert ist, und
   - Empfangseinrichtungen (11,9), um Echos, die von dem Zielmedium (2) als Antwort auf die Anregungswelle emittiert werden, zu empfangen, um mindestens einen Teil (3) des Zielmediums abzubilden,

   **dadurch gekennzeichnet, dass** das reflektierende Medium ein reflektierendes Festkörperobjekt (7) aufweist, an dem jeder Transducer (6) des ersten Netzes (5) angebracht ist, wobei das reflektierende Festkörperobjekt eingerichtet ist, um Mehrfachreflexionen der durch das Festkörperobjekt hindurchgehenden Anregungswelle hervorzurufen, und so, dass eine in das Festkörperobjekt eintretende Impulswelle einer Dauer von 1/fc, eine Schallemission einer Dauer, die mindestens gleich 10/fc beträgt, hin zu dem Zielmedium zur Folge hat.

22. Einrichtung nach Anspruch 21, in welcher die Emissionseinrichtungen (11, 5) eingerichtet sind, die Anregungswelle s(t) hin zu einer Anzahl von K, K mindestens gleich 1, vorgegebenen, dem Zielmedium (2) zugehörigen Zielpunkten k (4) emittieren zu lassen, indem sie von jedem Transducer i des ersten Netzes (5) ein Emissionssignal:

$$s_i(t) = \sum_{k=1}^{K} e_{ik}(t) \otimes s(t)$$

emittieren lassen,
wobei die Signale $e_{ik}(t)$ vorgegebene elementare Emissionssignale sind, die eingerichtet sind, dass, wenn die Transducer i Signale $e_{ik}(t)$ emittieren, eine Schallimpulswelle am Zielpunkt k erzeugt wird.

**23.** Einrichtung nach Anspruch 21, in welcher die Emissionseinrichtungen eingerichtet sind, die Anregungswelle während einer Dauer, die zwischen 1/2fc und 10/fc beträgt, zu emittieren.

**24.** Einrichtung nach Anspruch 21 oder Anspruch 23, in welcher die Empfangseinrichtungen (11, 9) eingerichtet sind, die von dem Zielmedium (2) zurückkommenden Echos bei einer Abhorchfrequenz, die ein ganzzahliges Vielfaches der zentralen Emissionsfrequenz ist, abzuhorchen.

**25.** Einrichtung nach Anspruch 24, in welcher die Empfangseinrichtungen (11,9) eingerichtet sind, die von dem Zielmedium (2) zurückkommenden Echos bei einer Abhorchfrequenz, die gleich zwei oder drei Mal der zentralen Emissionsfrequenz ist, abzuhorchen.

**26.** Einrichtung nach einem der Ansprüche 23 bis 25, in welcher die Empfangseinrichtungen (11, 9) ein mit dem reflektierenden Festkörperobjekt (7) verbundenes zweites Transducer-Netz (9) aufweisen.

**27.** Einrichtung nach einem der Ansprüche 21 bis 22, in welcher die Emissionseinrichtungen (11, 5) eingerichtet sind, eine Anregungswelle zu emittieren, die eingerichtet ist, einen Strahlungsdruck auf das Zielmedium (2) auszuüben.

**28.** Einrichtung nach einem der Ansprüche 21 bis 22, in welcher die Emissionseinrichtungen (11, 5) eingerichtet sind, eine Anregungswelle zu emittieren, die eingerichtet ist, das Zielmedium (2) lokal zu erwärmen.

**Claims**

**1.** A sound-wave imaging method including at least:

- one emission step during which a first array of transducers (5) is caused to emit at least one ultrasound excitation wave presenting a certain central emission frequency fc and focused on at least one target point (4) in a target medium (2), and said excitation wave is caused to pass through a reverberant medium (7) prior to reaching the target medium (2), and
- a step of receiving echoes emitted by the target medium (2) in response to the excitation wave, in order to image at least one portion (3) of said target medium,

the method being **characterized in that** during the emission step, a reverberant solid object (7) is used as the reverberant medium, with each transducer (6) of the first array (5) being secured thereto, said reverberant solid object (7) being adapted to give rise to multiple reflections of the excitation wave that passes therethrough and to cause an impulse wave of duration 1/fc entering into said solid object to lead to sound emission to the target medium taking place over a duration of not less than 10/fc.

**2.** A method according to claim 1, in which during the emission step, the excitation wave s(t) is emitted towards a number K not less than 1 of k predetermined target points (4) belonging to the target medium, by causing each transducer i of the first array (5) to emit an emission signal:

$$s_i(t) = \sum_{k=1}^{K} e_{ik}(t) \otimes s(t)$$

where the signals $e_{ik}(t)$ are predetermined individual emission signals adapted so that when the transducers i emit the signals $e_{ik}(t)$, an impulse sound wave is generated at the target point k.

**3.** A method according to claim 2, in which the signals $e_{ik}(t)$ are encoded on a number of bits lying in the range 1 to 64.

**4.** A method according to claim 3, in which the signals $e_{ik}(t)$ are coded on 1 bit.

**5.** A method according to any one of claims 2 to 4, in which the individual emission signals $e_{ik}(t)$ are determined experimentally during a training step, prior to said emission step.

**6.** A method according to claim 5, in which during the training step, an ultrasound impulse signal is caused to be emitted successively from each predetermined target point k, the signals $r_{ik}(t)$ received by each of the transducers i of the first array (5) from the emission of said ultrasound impulse signal are picked up, and the individual emission signals $e_{ik}(t)$ are determined by time reversal of the received signals $r_{ik}(t)$:

$$e_{ik}(t) = r_{ik}(-t).$$

**7.** A method according to claim 6, in which, during the training step, a liquid medium different from the target medium (2) is put into contact with the reverberant solid object (7), and said impulse signal is caused to be emitted from said liquid medium.

**8.** A method according to claim 5, in which, during the training step, for a predetermined target point k, an ultrasound impulse signal is caused to be emitted in succession from each of the transducers i of the first array, the signals $r_{ik}(t)$ received at the target point k from the emission of said ultrasound impulse signals are picked up, and the individual emission signals $e_{ik}(t)$ are determined by time reversal of the received signals $r_{ik}(t)$:

$$e_{ik}(t) = r_{ik}(-t).$$

9. A method according to claim 8, in which, during the training step, a liquid medium different from the target medium (2) is put into contact with the reverberant solid object (7), and the signals $r_{ik}(t)$ are picked up in said liquid medium.

10. A method according to claim 7 or claim 9, in which the liquid medium used during the training step essentially comprises water, and in which during the emission step, the target medium (2) in which the excitation wave is focused comprises at least a portion of the body of a patient.

11. A method according to any one of claim 2 to 4, in which the individual emission signals $e_{ik}(t)$ are determined by calculation.

12. A method according to any one of preceding claims, in which the reverberant solid object (7) through which the excitation wave is caused to pass during the emission step is in contact with the target medium (2).

13. A method according to claim 1, in which the excitation wave is emitted for a duration lying in the range 1/2.fc to 10/fc.

14. A method according to claim 1, in which:

- during the emission step, the excitation wave passes through at least one acoustically non-linear medium (2) and presents an amplitude that is sufficient for waves that are harmonics of the central emission frequency to be generated in said acoustically non-linear medium; and
- during the reception step, echoes returned from the target medium (2) are picked up at a receive frequency that is an integer multiple of the central emission frequency.

15. A method according to claim 14, in which, during the reception step, the echoes returning from the target zone (2) are picked up at a receive frequency equal to two or three times the central emission frequency.

16. A method according to claim 1, in which, during the emission step, the target medium (2) in which the excitation wave is focused comprises at least a portion of the body of a patient.

17. A method according to claim 1, in which, during the reception step, the echoes returning from the target zone (2) are picked up by means of a second array (9) of transducers secured to said reverberant solid object (7).

18. A method according to any one of claims 1 to 12, in which, during the emission step, an amplitude modulated excitation wave is emitted that is adapted to apply radiation pressure on the target medium (2) to generate a low frequency shear wave.

19. A method according to claim 18, in which, during the emission step, the target medium (2) in which the excitation wave is focused, comprises at least a portion of the body of a patient.

20. A method according to any one of claims 1 to 12, in which, during the emission step, an excitation wave is emitted that is adapted to heat the target medium (2) locally.

21. Sound-wave imaging apparatus comprising at least:

- emitter means (11, 5) comprising a first array (5) of transducers, said emitter means being adapted to cause at least one ultrasound excitation wave to be emitted by the first array of transducers through a reverberant medium (7), at least one ultrasound excitation wave presenting a certain central emission frequency fc and being focused on at least one target point (4) of a target medium (3), and
- receiver means (11, 9) for receiving echoes emitted by the target medium (2) in response to the excitation wave in order to image at least a portion (3) of said target medium,

the apparatus **being characterized in that** the reverberant medium comprises a reverberant solid object (7) having each of the transducers (6) of the first array (5) secured thereto, said reverberant solid object being adapted to give rise to multiple reflections of the excitation wave passing therethrough and to cause an impulse wave of duration 1/fc entering said solid object to lead to sound being emitted towards the target medium over a duration of not less than 10/fc.

22. Apparatus according to claim 21, in which, the emitter means (10, 5), are adapted to cause the excitation wave s(t) to be emitted to a number K not less than 1 of k predetermined target points (4) belong to the target medium (2), by causing each transducer i of the first array (5) to emit an emission signal:

$$s_i(t) = \sum_{k=1}^{K} e_{ik}(t) \otimes s(t)$$

where the signals $e_{ik}(t)$ are predetermined individual emission signals adapted so that when the transducers i emit the signals $e_{ik}(t)$, an impulse sound wave is generated at the target point k.

23. Apparatus according to claim 21, in which the emitter means are adapted to emit the excitation wave for a duration lying in the range 1/(2.fc) to 10/fc.

24. Apparatus according to claim 21 or claim 23, in which the receiver means (11, 9) are adapted to receive to the echoes returning from the target medium (2) at a receive frequency that is an integer multiple of the central emission frequency.

25. Apparatus according to claim 24, in which the receiver means (11, 9), are adapted to receive the echoes returning from the target medium (2) at a receive frequency equal to twice the central emission frequency.

26. Apparatus according to any one of claims 23 to 25, in which the receiver means (11, 9) comprise a second array (9) of transducers secured to said reverberant solid object (7).

27. Apparatus according to any one of claims 21 to 22, in which the emitter means (11, 5) are adapted to emit an excitation wave adapted to apply radiation pressure on the target medium (2).

28. Apparatus according to any one of claims 21 to 22, in which the emitter means (11, 5) are adapted to emit an excitation wave adapted to heat the target medium (2) locally.

FIG.1.

**EP 1 649 449 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 9703438 A
- US 4875487 A
- FR 2791136 A
- FR 0210838

**Littérature non-brevet citée dans la description**

- **MONTALDO G. et al.** Generation of a very high pressure pulses with 1-bit time reversal in a solid waveguide. *Journal of the Acoustical Society of America,* Décembre 2001, vol. 110 (6), 2849-2857